# FASCICULE DE BREVET EUROPEEN

(11) **EP 3 304 706 B1**
(45) Date de publication et mention de la délivrance du brevet: **28.10.2020**
(21) Numéro de dépôt: 16722654.7
(22) Date de dépôt: 12.05.2016
(51) Int. Cl.: H02K 29/03, H02K 1/16, H02K 1/27, H02K 19/10

(54) **MACHINE ÉLECTRIQUE TOURNANTE AVEC UN STATOR À ENCOCHES FERMÉES ET PLUS PARTICULIÈREMENT MACHINE ÉLECTRIQUE SYNCHRONE À RÉLUCTANCE VARIABLE ASSISTÉE D'AIMANTS PERMANENTS**
ELEKTRISCHE DREHMASCHINE MIT EINEM STATOR MIT GESCHLOSSENEN NUTEN, INSBESONDERE ELEKTRISCHE SYNCHRONMASCHINE MIT VERÄNDERLICHER RELUKTANZ MIT UNTERSTÜTZUNG DURCH PERMANENTMAGNETEN
ROTATING ELECTRIC MACHINE WITH A STATOR WITH CLOSED NOTCHES AND MORE PARTICULARLY VARIABLE-RELUCTANCE SYNCHRONOUS ELECTRIC MACHINE ASSISTED BY PERMANENT MAGNETS

(30) Priorité: 28.05.2015 FR 1554835
(43) Date de publication de la demande: 11.04.2018
(73) Titulaire: IFP Energies nouvelles, 92500 Rueil-Malmaison (FR); Mavel S.r.l., 11026 Pont Saint Martin (AO) (IT)
(72) Inventeur: BOISSON, Julien, 92330 Sceaux (FR); DIB, Wissam, 92150 Suresnes (FR); BIGLINO, Rinato, 16136 Genova (IT); BETTONI, Davide, 10010 Settimo Vittone To Italy (IT)
(74) Mandataire: Leoncini, Alberto
(86) Numéro de dépôt international: PCT/EP2016/060697
(87) Numéro de publication internationale: WO 2016/188764

(56) Documents cités:
- EP-A1- 1 670 119
- WO-A1-2014/027630
- FR-A1- 2 973 179
- US-A1- 2011 175 482

## Description

La présente invention se rapporte à une machine électrique tournante avec un stator à encoches fermées et plus particulièrement à une machine électrique synchrone à réluctance variable assistée d'aimants permanents.

Généralement, une telle machine électrique comporte un stator et un rotor disposés coaxialement l'un dans l'autre.

Le rotor est formé d'un corps de rotor avec un empilage de tôles placé sur un arbre de rotor. Ces tôles comprennent des logements pour des aimants permanents et des perforations pour créer de barrières de flux permettant de diriger radialement le flux magnétique des aimants vers le stator.

Ce rotor est généralement logé à l'intérieur d'un stator qui porte des bobinages électriques permettant de générer un champ magnétique permettant d'entrainer en rotation le rotor.

Comme cela est mieux décrit dans le document EP 1 057 242, le stator est de forme annulaire et comprend une pluralité d'encoches radiales ouvertes en direction du rotor et qui s'étendent tout au long du pourtour du stator.

Ces encoches sont prévues pour recevoir des bobinages d'induit qui sont introduits dans le stator par la face ouverte des encoches puis y sont fixés par tous moyens connus.

De manière générale, l'ondulation du couple est importante dans ce type de machine synchrone à reluctance assistée d'aimants permanents.

Ceci peut générer des à-coups et des vibrations au niveau du rotor en entrainant un inconfort d'utilisation de cette machine.

Le document WO2014027630 divulgue une machine électrique avec un stator à encoches fermées qui permet de réduire l'ondulation du couple et le bruit acoustique.

A cet effet, la présente invention concerne une machine électrique selon la revendication 1.

Les encoches s'étendent axialement le long du stator.

Les encoches présentent une section oblongue avec une paroi basse à distance de la paroi du stator, une paroi haute et deux faces reliant les parois.

Le rotor peut comprendre des logements pour des générateurs de flux magnétique et des évidements formant des barrières de flux.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est une vue schématique en coupe transversale de la machine électrique selon l'invention,
- la figure 2 qui est une vue schématique en coupe transversale du stator de la machine de la figure 1 avec une section locale selon la ligne fermé A,
- la figure 3 qui est un graphique illustrant l'évolution du couple à courant constant en fonction de la position électrique du rotor pour une machine électrique de l'art antérieur et pour une machine électrique selon l'invention et
- la figure 4 qui est un graphique avec des courbes illustrant le couple instantanée de la machine électrique (en N.m) par rapport à la position électrique de la machine.

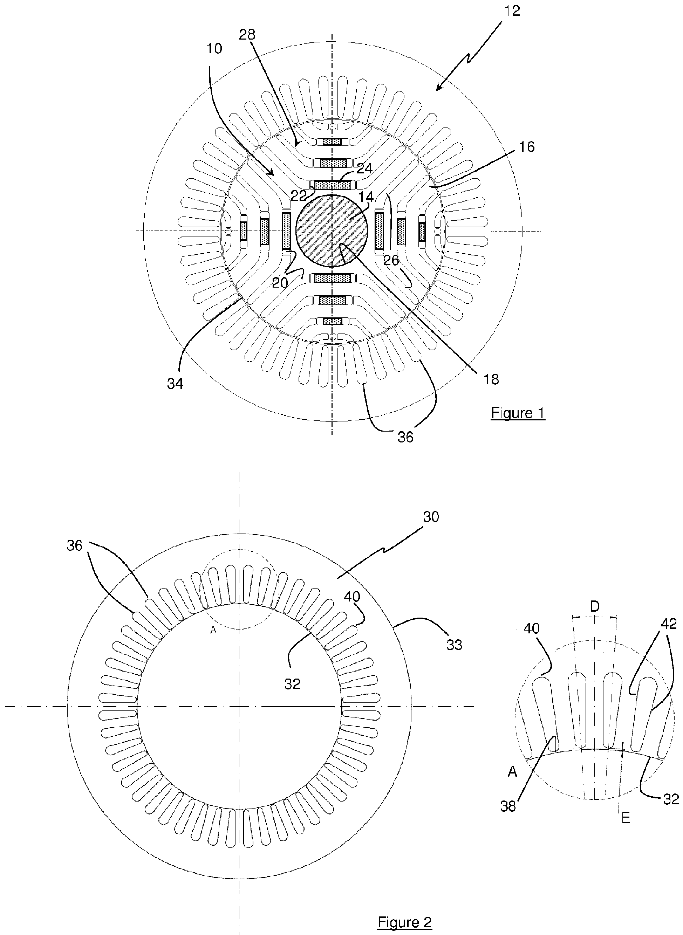

Comme illustré sur la figure 1 une machine électrique tournante, ici une machine synchrone à réluctance variable assistée d'aimant permanent, comporte un rotor 10 et un stator 12 imbriqués l'un dans l'autre en étant coaxiaux.

Le rotor comporte, de manière connue en soi, un arbre 14, de préférence magnétique, sur lequel est placé un empilage de tôles ferromagnétiques planes identiques 16, qui sont assemblées les unes aux autres par tous moyens connus.

Les tôles 16 de forme circulaire comprennent un alésage central 18 traversé par l'arbre de rotor 14 et une pluralité d'évidements axiaux 20 qui traversent les tôles de part en part.

Une première série d'évidements axiaux rectangulaires 22, disposés radialement les uns au-dessus des autres et à distance les uns des autres, forment des logements pour des générateurs de flux magnétiques, ici des aimants permanents 24 sous forme de barreau également rectangulaire de longueur sensiblement égale à la longueur de l'empilage de tôles.

L'autre série d'évidements consiste en des perforations 26 de direction radiale inclinée, qui partent de ces logements pour arriver au voisinage du bord des tôles.

Tel que cela est représenté sur la figure 1, les perforations inclinées sont disposées symétriquement par rapport aux logements 22 des aimants. Ainsi, il se forme à chaque fois une figure géométrique sensiblement en forme de V à fond aplati avec le fond plat formé par le logement 22 et avec les bras inclinés de ce V formés par les perforations 26.

Il se crée ainsi des barrières de flux 28 formées par les perforations. Le flux magnétique provenant des aimants ne peut alors que transiter par les parties pleines entre les perforations.

En se rapportant en plus à la figure 2, le stator 12 comprend une bague annulaire 30 avec une paroi interne 32 dont le diamètre intérieur est prévu pour recevoir le rotor 10 avec un espace nécessaire pour réaliser un entrefer 34, et une paroi externe 33.

Cette bague comprend une multiplicité de perçages 36, ici de section oblongue, qui forment des encoches fermées pour les bobinages d'induit.

Plus précisément, ces perçages s'étendent axialement tout au long du stator en étant disposés radialement sur la bague tout en étant placés circonférentiellement à distance les uns des autres d'une distance D.

Dans l'exemple décrit, ces perçages oblongs présentent une paroi basse 38 de forme semi-circulaire qui est située à une distance E de la paroi interne 32 du stator, une paroi haute 40 de forme également semi-circulaire, ici de dimension diamétrale supérieure à celle de la paroi basse, et à distance de la paroi externe 33 du stator, et deux faces latérales 42 reliant les extrémités des parois semi-circulaires.

Avantageusement, la distance E est d'une valeur minimale de 0,35mm et d'une valeur maximale entre 0,5 mm et 1 mm.

Par cela, il est créé un volume fermé qui forme une encoche fermé pour recevoir le bobinage d'induit.

Ainsi, la paroi 32 est une paroi continue et l'entrefer 34 est quasiment constant entre le rotor et le stator et cela sur toute la circonférence.

De plus, comme l'extérieur du rotor et l'intérieur du stator sont lisses, cela permet d'avoir un bruit aérodynamique réduit.

Bien entendu et cela sans sortir du cadre de l'invention, ces perçages peuvent avoir une section autre qu'une section oblongue, telle qu'une section cylindrique.

Dans ce cas, les parois haute et basse des encoches sont de même dimension diamétrale en formant une ligne fermée tel qu'un cercle ou un ovale.

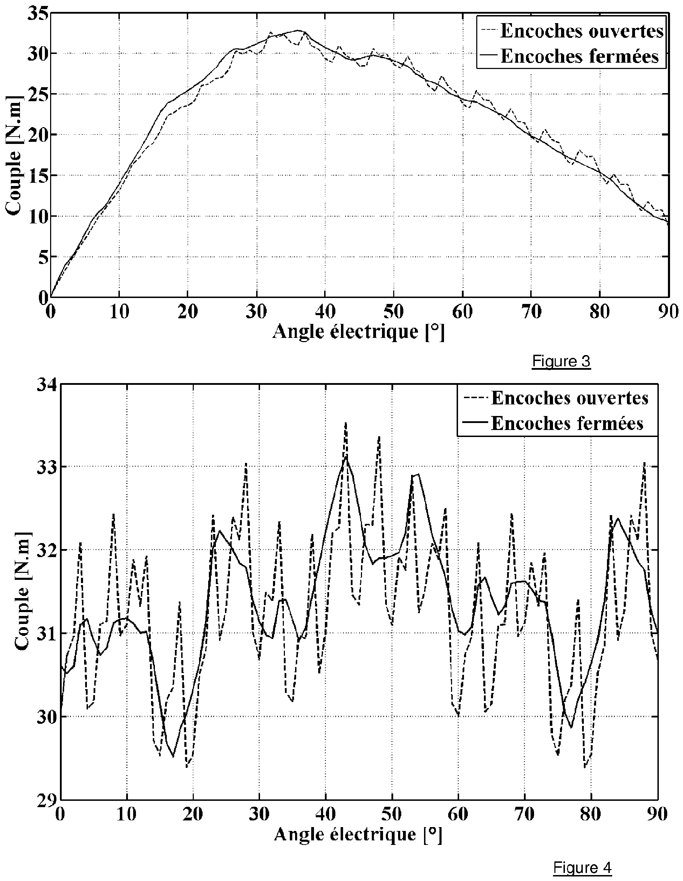

En se référant maintenant à la figure 3 qui est un graphique avec des courbes illustrant le couple de la machine électrique (en N.m) par rapport à la position électrique du rotor (en °) pour un courant constant, pour une machine de l'art antérieur (trait pointillés) avec des encoches ouvertes du stator et pour une machine selon l'invention (trait fort) avec des encoches fermées du stator, il peut être constaté que les variations de couple de la machine, essentiellement dues aux effets d'encoches, sont fortement diminuées pour une machine selon l'invention par rapport à une machine de l'art antérieur.

La figure 4 est un graphique avec des courbes illustrant le couple instantanée de la machine électrique (en N.m) par rapport à la position électrique de la machine (en °) pour un courant constant et un angle de défluxage constant, pour une machine avec des encoches ouvertes du stator (art antérieur) et pour une machine selon l'invention avec des encoches fermées du stator.

Sur cette figure, il peut être constaté que les variations (ou ondulations) du couple de la machine électrique selon l'invention sont fortement diminués par rapport à une machine électrique selon l'art antérieur.

## Revendications

1. Machine électrique comprenant un rotor (10) et un stator (12) comportant une paroi interne (32) en regard du rotor, ledit stator portant une multiplicité d'encoches radiales disposées circonférentiellement le long dudit stator, **caractérisée en ce que** les encoches (36) comprennent une paroi basse (38) de forme semi-circulaire et à distance (E) de la paroi interne du stator, une paroi haute (40) de forme semi-circulaire de dimension diamétrale supérieure à celle de la paroi basse (38) et à distance de la paroi externe (33) du stator et deux faces (42) reliant les parois basse (38) et haute (40) de façon à former une multiplicité d'encoches fermées.

2. Machine électrique selon la revendication 1, **caractérisée en ce que** les encoches s'étendent axialement le long du stator.

3. Machine électrique selon la revendication 1 ou 2, **caractérisée en ce que** les encoches présente une section oblongue avec une paroi basse (38) à distance (E) de la paroi du stator, une paroi haute (40) et deux faces (42) reliant les parois.

4. Machine électrique selon la revendication 1, **caractérisée en ce que** le rotor (10) comprend des logements pour des générateurs de flux magnétique (24) et des évidements (26) formant des barrières de flux (28).

## Patentansprüche

1. Elektrische Maschine, umfassend einen Rotor (10) und einen Stator (12), der eine Innenwand (32) gegenüber dem Rotor aufweist, wobei der Stator eine Vielzahl von radialen Nuten aufweist, die um den Umfang entlang dem Stator angeordnet sind, **dadurch gekennzeichnet, dass** die Nuten (36) eine halbkreisförmige untere Wand (38) in einem Abstand (E) von der Innenwand des Stators, eine halbkreisförmige obere Wand (40), deren diametrale Abmessung größer als die der unteren Wand (38) ist und die sich in einem Abstand von der Außenwand (33) des Stators befindet, und zwei Flächen (42), die die untere (38) und die obere (40) Wand verbinden, so dass eine Vielzahl von geschlossenen Nuten gebildet wird, umfassen.

2. Elektrische Maschine nach Anspruch 1, **dadurch gekennzeichnet, dass** sich die Nuten axial entlang dem Stator erstrecken.

3. Elektrische Maschine nach Anspruch 1 oder 2, **dadurch gekennzeichnet, dass** die Nuten einen länglichen Querschnitt mit einer unteren Wand (38) in einem Abstand (E) von der Wand des Stators, einer oberen Wand (40) und zwei die Wände verbindenden Flächen (42) aufweisen.

4. Elektrische Maschine nach Anspruch 1, **dadurch gekennzeichnet, dass** der Rotor (10) Aufnahmen für Magnetflussgeneratoren (24) und Flussbarrieren (28) bildende Aussparungen (26) umfasst.

## Claims

1. Electric machine comprising a rotor (10) and a stator (12) comprising an internal wall (32) facing the rotor, said stator bearing a multitude of radial slots arranged circumferentially along said stator, **characterized in that** the slots (36) comprise a bottom wall (38) of semi-circular shape and at a distance (E) from the internal wall of the stator, a top wall (40) of semi-circular shape of diametral dimension greater than that of the bottom wall (38) and at a distance from the external wall (33) of the stator and two faces (42) connecting the bottom (38) and the top (40) walls so as to form a multitude of closed slots.

2. Electric machine according to Claim 1, **characterized in that** the slots extend axially along the stator.

3. Electric machine according to Claim 1 or 2, **characterized in that** the slots have an oblong cross section with a bottom wall (38) at a distance (E) from the wall of the stator, a top wall (40) and two faces (42) connecting the walls.

4. Electric machine according to Claim 1, **characterized in that** the rotor (10) comprises housings for magnetic-flux generators (24) and recesses (26) forming flux barriers (28).
